# EUROPEAN PATENT APPLICATION

(11) **EP 3 812 511 A1**
(43) Date of publication of application: **28.04.2021**
(21) Application number: 20819608.9
(22) Date of filing: 25.08.2020
(51) Int. Cl.: E01F 15/04, E01F 15/14, E01F 9/30, E01F 9/615, H02S 10/00, G08B 21/18, F21S 9/03, G08B 25/10, G06Q 50/30

(54) **SMART GUARDRAIL**

(30) Priority: 27.08.2019 KR 20190105238
(71) Applicant: TLE. Inc, Suncheon-si, Jeollanam-do 58034 (KR)
(72) Inventor: The designation of the inventor has not yet been filed
(74) Representative: reuteler & cie SA
(86) International application number: PCT/KR2020/011302
(87) International publication number: WO 2021/040372

(57) **Abstract**

Proposed is a smart guardrail capable of absorbing a shock induced when a vehicle collides with the guardrail to protect an occupant against the shock and of in real time performing monitoring and remote control to prevent a subsequent traffic accident. The smart guardrail, including a support fixedly installed at an equal distance at a center or an edge of a road, and a guardrail plate fixedly coupled to one or both sides of the support, further includes: a shock absorption member absorbing and thus reducing a shock induced when a vehicle collides with the guardrail; and a terminal configured to detect an external shock, an appearance of a wild animal on the road, and transmit a warning signal to an adjacent terminal positioned in a direction opposite to a traveling direction of the vehicle and to terminals positioned in succession behind the adjacent terminal.

## Description

### Technical Field

The present invention relates to a smart guardrail. More particularly, the present invention relates to a smart guardrail that is capable of absorbing a shock that is induced when a vehicle collides with the guardrail to protect an occupant against the shock and of in real time performing monitoring and remote control to prevent a subsequent traffic accident.

### Background Art

Generally, a guardrail blocks a vehicle from colliding with a vehicle traveling on an opposite road in a traffic accident, and from deviating from a road due to careless driving. That is, the guardrail serves to prevent the traffic accident from causing a subsequent accident and to prevent serious damage and casualties.

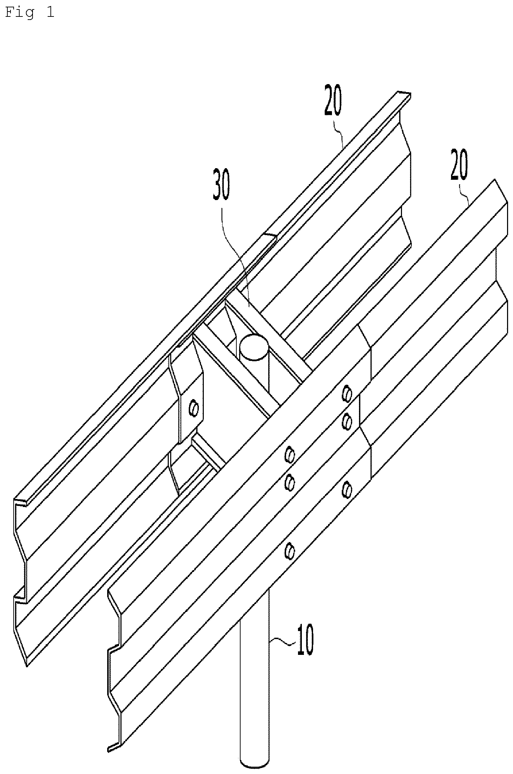

FIG. 1 illustrates a guardrail, particularly, a guardrail for a divided road in the related art.

The guardrail for the divided road is installed in a longitudinal direction in the center of a road, and thus vehicles travel on both sides of the road.

When a vehicle traveling on either side of the road collides with the guardrail, a shock induced by the collision is transferred to a support of the guardrail through a guardrail plate thereof. Thus, the guardrail is broken or damaged due to the shock.

A guardrail 20 in the related art is fixed by beam-shaped coupling members 30 with a support 10 in between. With a minor shock that is not likely to cause damage to the guardrail, the support 10 or the guardrail plate 20 is bent or damaged because a member absorbing the minor shock is not provided. In a case where the damaged support 19 or guardrail plate 20 is not repaired immediately, the guardrail is disfigured and cannot resist an additional minor shock. Thus, a severe accident can occur.

A shoulder road refers to both edges of a highway or a motorway and is used as a stopping space in case of an emergency or as a path for an emergency vehicle.

In most cases, a driver of a vehicle comes to a stop at the shoulder road when the vehicle malfunctions or an accident occurs while driving.

At this time, the driver has to install a safety tripod approximately 100 to 200m behind the vehicle. Drivers who are driving vehicles are alerted that the vehicle stops at the shoulder road. Thus, an accident that could otherwise occur can be prevented.

However, it is difficult to install on the highway or the motorway on which vehicles are traveling at high speeds. Furthermore, a person who carries the safety tripod runs the risk of an accident while walking 100 to 200m facing traveling vehicles, particularly, at night.

That is, when an accident occurs on the highway or the like, in order to alert drivers of the following vehicles to the accident, emergency lamps of a vehicle have to be turned on and the safety tripod has to be installed at a stipulated distance of 100 to 200m away from behind the vehicle. However, a job of installing the safety tripod at the stipulated distance of 100 to 200m from behind the vehicle is too risky because many vehicles travel at high speeds. An accident in which a person is hit by a fast traveling vehicle and loses his/her life while installing the safety tripod frequently occurs.

In addition, wild animals (amphibians, mammals, reptiles, and the like) live in mountains, rice paddies, and fields in the vicinity of a road, such as a perimeter highway, a mountain road, or a highway. For this reason, roadkill frequently occurs on these roads.

The Korean Ministry of Environment is obligated to designate an environment-friendly road if necessary to prevent the roadkill. A crossing pathway for wild animals is constructed over the environment-friendly road. A road sign alerting a driver to possible roadkill is installed in an area where the roadkill frequently occurs. A driver of a vehicle traveling on a road in this area is alerted to a possible appearance of a wild animal using GPS. However, with these measures for preventing the roadkill, the wild animal cannot be prevented from appearing on the road. The problem of the roadkill on a dark night remains to be solved.

Streetlights installed on the side of a road, such as a perimeter highway, a mountain road, or a highway are controlled in such a manner as to be turned on at sunset and to be turned off at sunrise. Once turned on, the streetlight emits light at full capacity until turned off. Thus, the streetlight operates at a high power consumption.

The streetlight is controlled using a sensor measuring ambient brightness in such a manner as to be turned off during the daytime. However, the streetlight remains turned on at night. The streetlight also operates at a high power consumption.

### Disclosure

### Technical Problem

An objective of the present invention, which was devised to solve the above-described problems, is to provide a smart guardrail capable of effectively absorbing an external shock and thus protecting an occupant in a vehicle against the external shock. To that end, the smart guardrail includes a means for effectively reducing a shock that is induced when a vehicle collides with the guardrail installed in the center or an edge of a road and a means for detecting a shock induced by the collision of the vehicle and an appearance of a wild animal on the road and alerting the following vehicles to the collision of the vehicle and the appearance of the wild animal. Thus, an accident occurring subsequently to the collision of the vehicle and roadkill can be prevented. This in turn can prevent a severe traffic accident that could otherwise occur.

Another objective of the present invention is to provide a smart guardrail capable of detecting a traveling vehicle and sequentially turning on low-height streetlights provided on the guardrail, in relays in a traveling direction of the vehicle, and sequentially turning off the low-height streetlights in relays after the vehicle passes. Thus, power consumption by the streetlights can be remarkably reduced.

### Technical Solution

According to an aspect of the present invention, there is provided a smart guardrail including: a support fixedly installed at an equal distance at a center or an edge of a road, and a guardrail plate fixedly coupled to one or both sides of the support, the smart guardrail further including:
a shock absorption member absorbing and thus reducing a shock that is induced when a vehicle collides with the guardrail; and a terminal configured to detect an external shock, such as the collision of the vehicle, detect an appearance of a wild animal on an inner side of the road, and transmit a warning signal to an adjacent terminal positioned in a direction opposite to a traveling direction of the vehicle and to terminals positioned in succession behind the adjacent terminal, thereby causing a warning to be displayed
wherein a main body of the terminal is hexahedron-shaped and has an isosceles trapezoidal cross section, a wider of parallel surfaces of the main body is attached to the guardrail plate, an operation switch that is operated by a user to generate an operation signal when a traffic accident occurs is attached to a smaller of the parallel surfaces thereof, a solar battery configured to convert solar energy into electric energy, perform static voltage processing on the electric energy, and supply resulting power is installed on an upper inclined surface of the main body, an illumination unit configured to emit light according to a control signal of a controller is installed on a lower inclined surface thereof, and
a bracket is fastened using a third fastening member to the guardrail in such a manner that the terminal is positioned a distance away from the guardrail, and the main body of the terminal is supported by a spring on the guardrail to increase shock sensitivity in a state where a flange of the main body thereof is positioned in a space between the bracket and the guardrail.

In the smart guardrail, the shock absorption member may include a shock absorption body having a first longitudinal fastening hole extending horizontally in the shape of a wave, the shock absorption body passing through the support and being positioned obliquely in the traveling direction of the vehicle between the guardrail and the support, and the shock absorption body may be fastened with a first fastening member to the guardrail plate, in a state where a portion of the shock absorption body is inserted into the support, the first longitudinal fastening hole being formed in the portion thereof.

In the smart guardrail, the guardrail plate may have a second longitudinal fastening hole extending horizontally in the shape of a wave along a direction of a road, the shock absorption body being fastened to the guardrail plate with a second fastening member that passes through the second longitudinal fastening hole.

In the smart guardrail, the terminals, each being assigned a unique ID, may be grouped into one zone, each of the terminals in the one zone may include: the operation switch; the solar battery; the illumination unit; a sensor unit configured to detect the shock that is induced when the vehicle collides with the guardrail, detect the appearance of the wild animal on the inner side of the road, and generate a detection signal; a controller receiving the operation signal and the detection signal, determining the traffic accident, outputting a control signal, and wirelessly relaying the control signal to the adjacent terminal positioned in the direction opposite to the traveling direction of the vehicle and to the terminals positioned in succession behind the adjacent terminal, the control signal containing the ID assigned to each of the terminals; and a warning display unit, made up of a plurality of LEDs, alerting the occurrence of the traffic accident and the appearance of the wild animal by lighting or flickering in response to the control signal of the controller, wherein the sensor unit may detect a vehicle that is traveling on the road on a dark night and may generate a detection signal, and the controller may receive the detection signal, may output a control signal to the illumination unit, may wirelessly relay the control signal to an adjacent terminal positioned in the traveling direction of the vehicle and to terminals positioned in succession ahead of the adjacent terminal, the control signal containing the ID assigned to each of the terminals.

In the smart guardrail, when determining the occurrence of the traffic accident or detecting the appearance of the wild animal on the inner side of the road, the controller may transmit a signal for alerting the occurrence of the traffic accident or a signal for alerting the appearance of the wild animal, in the form of a push notification, to a smartphone carried by an occupant in a vehicle that is traveling in the vicinity of a place where the traffic accident occurs or a place where the wild animal appears.

The smart guardrail may further include: an Internet-of-things communication module, provided to each of the foremost terminal and the rearmost terminal in the zone with the respect to the traveling direction of the vehicle, receiving the control signal of the terminal in the same zone through Internet-of-things communication with a central control server, and transmitting the signal for alerting the occurrence of the traffic accident or the signal for alerting the appearance of the wild animal.

The smart guardrail may further include: an information display board installed on an upper portion of the support, on which an action to be taken in case of an emergency situation or an emergency notification in case of an emergence is displayed in text format.

### Advantageous Effects

A smart guardrail according to the present invention includes a means for effectively reducing a shock that is induced when a vehicle collides with the guardrail installed in the center or an edge of a road and a means for detecting a shock induced by the collision of the vehicle and an appearance of a wild animal on the road and alerting the following vehicles to the collision of the vehicle and the appearance of the wild animal. With this configuration, the smart guardrail is capable of effectively absorbing an external shock and thus protecting an occupant in a vehicle against the external shock. Thus, an accident occurring subsequently to the collision of the vehicle and roadkill can be prevented. This in turn can prevent a severe traffic accident that could otherwise occur.

The smart guardrail is capable of detecting a traveling vehicle and sequentially turning on low-height streetlights provided on the guardrail, in relays in a traveling direction of the vehicle, and sequentially turning off the low-height streetlights in relays after the vehicle passes. Thus, power consumption by the streetlights can be remarkably reduced.

The smart guardrail performs functions of absorbing a shock, providing an emergency notification when a traffic accident occurs or when a wild animal appears, serving as an electronic road sign, and serving as streetlights. Thus, installation and maintenance costs associated with the electronic road signal and the streetlights can be reduced.

### Description of Drawings

FIG. 1 is a view illustrating a guard rail for a divided road in the related art;
FIG. 2 is a view a smart guardrail according to an embodiment of the present invention;
FIG. 3 is a view illustrating a communication procedure for a terminal provided in the smart guardrail according to the embodiment of the present invention to perform communication;
FIG. 4 is a block diagram illustrating the terminal in FIG. 3;
FIG. 5 is a view illustrating the smart guardrail in FIG. 2;
FIG. 6 is an enlarged view illustrating a portion, on which a terminal is attached, of the smart guardrail in FIG. 2;
FIG. 7 is a view illustrating a shock absorption member of the smart guardrail in FIG. 2.
FIG. 8 is a view illustrating that the terminal of the smart guardrail in FIG. 2 is installed on a rock face; and
FIG. 9a and 9b are views each illustrating a state where the smart guard rail according to the embodiment of the present invention is installed.

### Best Mode

An embodiment of the present invention will be described below in terms of configuration and operation with respect to the accompanying drawings.

The same constituent elements are given the same reference character throughout all the drawings.

If detailed descriptions of functions and configurations known in the related art will unnecessarily make the nature and gist of the present invention unapparent, the detailed descriptions thereof are omitted.

When the expression "includes a constituent element" is used throughout the specification, unless otherwise particularly described, this expression means "further includes any other constituent element, not "excludes any other constituent element".

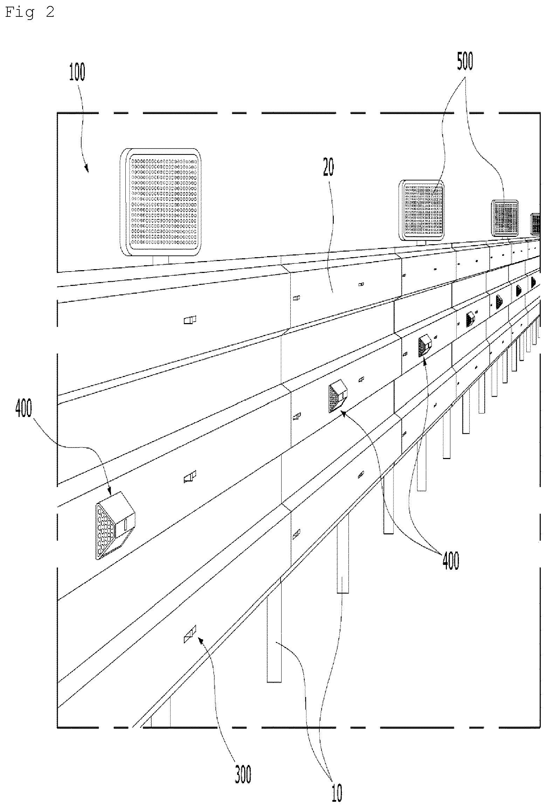

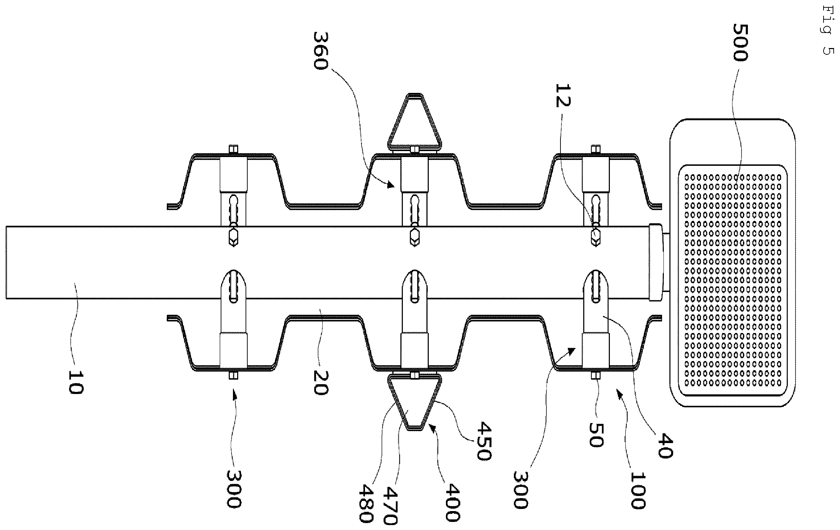

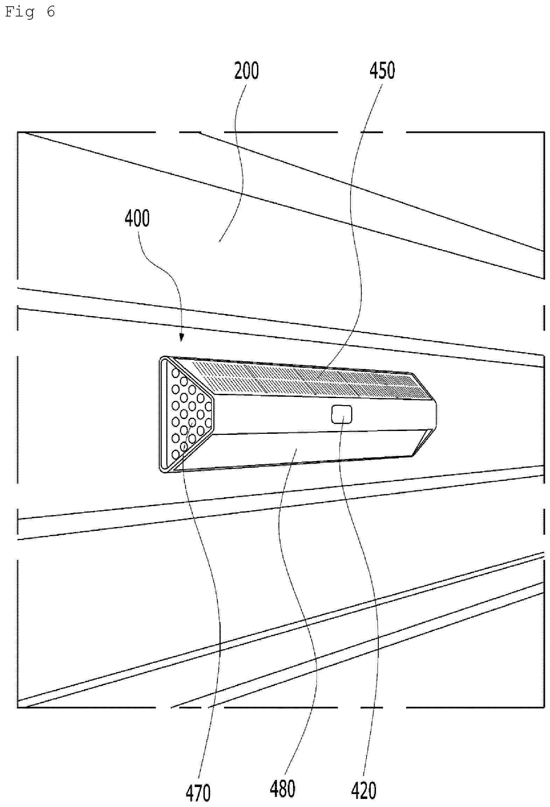

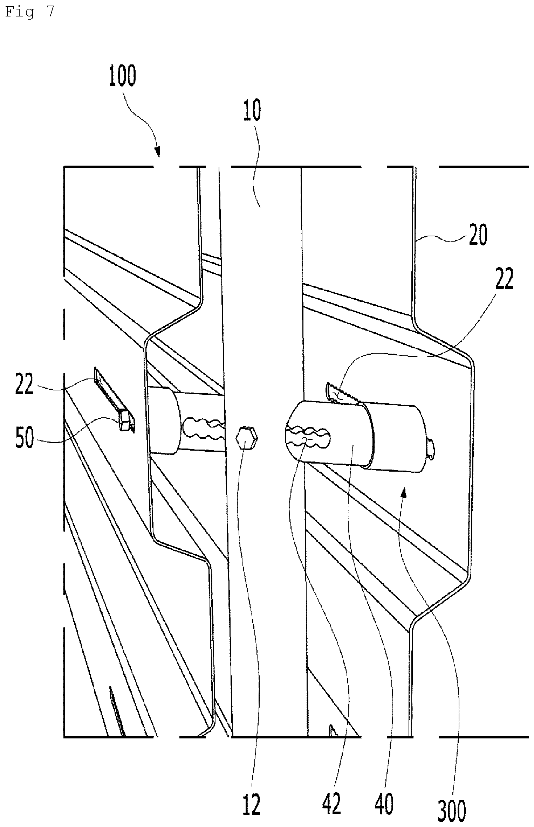

FIG. 2 is a view illustrating a smart guardrail according to an embodiment of the present invention. FIG. 5 is a side view illustrating the smart guardrail in FIG. 2. FIG. 6 is an enlarged view illustrating a portion, on which a terminal is attached, of the smart guardrail in FIG. 2. FIG. 7 is an enlarged view illustrating a shock absorption member of the smart guardrail in FIG. 2. In FIG. 7, a guardrail for a divided road according to the present embodiment is illustrated.

As illustrated in FIG. 2 and FIGS. 5 to 7, the smart guardrail according to the embodiment of the present invention includes a support 10, a guardrail plate 20, a shock absorption member 300, a terminal 400, and an information display board 500.

The support 10 of the guide rail for the divided road is fixedly installed at an equal distance at the center of a road. The guardrail plates 20 are fixedly coupled to both sides, respectively, of the support 10.

The shock absorption member 300, the terminal 400, and the information display board 500 are attached to a normal guardrail.

The information display board 500 is attached, for example, at every distance of 1km, to an upper portion of the support 10. An action that has to be taken in case of an emergence situation, or an accident notification in case of an accident is displayed in text format on the information display board 500. Examples of the information display board 500 include a variable-message sign (VMS) that is made up of a plurality of LEDs.

As illustrated in FIGS. 5 and 7, the shock absorption member 300 includes a shock absorption body 40 having a longitudinal fastening holes 42 extending horizontally in the shape of a wave. The shock absorption body 40 passes through the support 10 and is positioned obliquely in a traveling direction of a vehicle between a pair of the guardrail 20.

The shock absorption body 40 is fastened with a first fastening member 12 in a state where a portion, in which the longitudinal fastening hole 42 is formed, of the shock absorption body 40 is inserted into the support 10.

Accordingly, when an external shock, such as collision of the vehicle is applied to the guardrail plate 20, the shock absorption body 40 is pushed backward toward the opposite guardrail plate 20, thereby absorbing a collision-induced shock.

In addition, the guardrail plate 20 also has a longitudinal fastening hole 22 extending in the shape of a wave horizontally along a direction of a road. The shock absorption body 40 is fastened to the guardrail plate 20 with a second fastening member 50 passing through the longitudinal fastening hole 22.

Accordingly, when the external shock, such as the collision of the vehicle, is applied to the guardrail plate 20, the guardrail plate 20 is pushed forward along the direction of the road, thereby absorbing a collision-induced shock.

The terminal 400 is provided, at every predetermined distance greater than a distance between the supports 10, on the guardrail 100. The terminal 400 detects the external shock, such as the collision of the vehicle, or detects an appearance of a wild animal on an inner side of a road, and transmits a warning signal (a control signal) to an adjacent terminal 400 positioned in a direction opposite to the traveling direction of the vehicle and to terminals 400 positioned in succession behind the adjacent terminal. The adjacent terminal 400 and the terminals 400 in succession behind the adjacent terminal 400 display a warning to alert drivers of the following vehicles to the collision of the vehicle or the appearance of the wild animal, in order for a driver to safely drive the vehicle.

Furthermore, the terminal 400 detects a vehicle that travels along a road at night and transmits a lighting signal to an adjacent terminal positioned in the traveling direction of the vehicle and terminals 400 positioned in succession ahead of the adjacent terminal. The adjacent terminals 400 and the terminals 400 in succession ahead of the adjacent terminal 400 sequentially emit light in order for a driver to safely drive the vehicle.

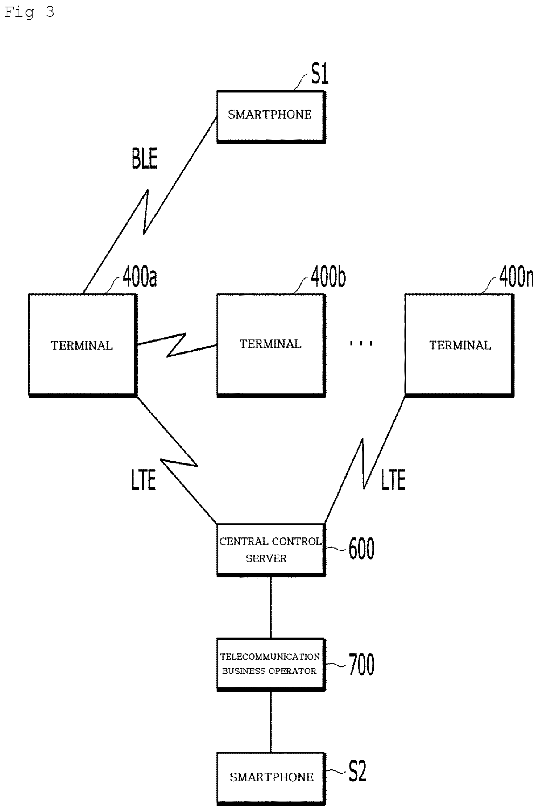

FIG. 3 illustrates a procedure for the terminal 400 to perform communication. The terminal 400 is installed at an equal distance (for example, 20 to 30m) on the guardrail 100 in the center of the road in a manner that is positioned along the traveling direction of the vehicle at a height (low height) that is almost the same as that of a vehicle. Multiple terminals 400 each of which is assigned a unique ID, that is, terminals 400a, 400b, and so forth up to 400n are grouped into one zone.

Multiple zones are formed in succession along the guardrail in the center of the road.

The terminal 400 operates only in situations where the external shock, such as the collision of the vehicle, occurs, where an operation switch is switched on, where a wild animal appears on the road, where an event, such as detection of the vehicle, occurs, and where a central control server 600 performs a state control. The terminal 400 neither makes a determination independently, nor operates independently.

The terminal 400 includes an antenna for low-power Bluetooth (BLE), ZigBee, or wireless communication in order to transmit a signal in relays to and from the adjacent terminal 400. For example, a beacon signal between low-power Bluetooth antennas is transmitted in relays from the upstream terminal 400 (the terminal 400 positioned in the traveling direction of the vehicle) to the downstream terminal 400 (the terminal 400 positioned in the direction opposite to the traveling direction of the vehicle) or from the downstream terminal 400 to the upstream terminal 400, depending on a type of control signal for the beacon signal.

For example, a signal associated with the appearance of the wild animal on the road or with the external shock, such as the collision of the vehicle is transmitted from the upstream terminal 400 to the downstream terminal 400, and a signal associated with the vehicle detection is transmitted from the downstream terminal 400 to the upstream terminal 400.

When the wild animal appears on the road or the external shock (due to a traffic accident) occurs, the terminal 400 transmits the signal associated with the appearance of the wild animal or the signal associated with the external shock through the antenna, a smartphone S1 in an adjacent vehicle adjacent to the terminal 400 receives the signal.

Accordingly, the smart phone S1 may collect information, such as the place (location) and time for the external shock (the traffic accident) or the appearance of the wild animal, and a direction of a lane associated therewith, and may transmit the collected information to the central control server 600 that will be described below.

As described above, the terminal 400 performs low-power Bluetooth, ZigBee, or wireless communication with smartphones S1 and S2 carried by an occupant in the following vehicle that is traveling toward the direction of the place for the external shock or for the appearance of the wild animal. The smartphones S1 and S2 in the vehicle that is traveling on the road receive the information transmitted by the terminal 400. That is, the smartphones S1 and S2 receive information on a situation that occurs in front of the vehicle, using a push notification service.

More specifically, when receiving the signal, the smartphone S1 may collect associated information and transmit the associated information to the central control server 600. The central control server 600 may process the received information and transmit the processed information to a server 700 of a telecommunication business operator. The server 700 of the telecommunication business operator operates, for example, in conjunction with geo-fencing, and may transmit the processed information in the form of a push notification. Thus, the processed information may be displayed on the smartphone S2 in another vehicle.

The information, such as the place (location) and time for the external shock or the appearance of the wild animal, and the direction of the lane associated therewith, is displayed on a screen of the smartphone S2 on which a dedicated application is installed.

That is, according to the present invention, through communication between the low-power Bluetooth antenna of the terminal 400 and the smartphones S1 and S2, the information is exactly transmitted only to the dedicated application installed on the smartphones S1 and S2 in the vehicles that travel in the same direction on the same road.

In addition, a reporting button is provided on the screen of the smartphone S1 on which the dedicated application is installed. The reporting button is for reporting a risk-associated obstacle, such as the appearance of the wild animal or the collision of the vehicle, that occurs in front of the vehicle traveling on the road. When the reporting button is clicked, a reporting signal is transmitted to the central control server 600, and a signal for alerting a driver to the risk-associated obstacle is accordingly transmitted to the smartphone S2 carried by the driver of the following vehicle.

Among multiple terminals 400a, 400b, and so forth up to 400n in the same zone, the foremost (first) terminal (foremost relay 400a) and the rearmost (last) terminal (rearmost relay 400n) each may further include an Internet-of-things (IoT) communication module, for example, an LTE/M module or a LoRa module, in addition to the low-power Bluetooth antenna. The Internet-of-things (IoT) communication module is for communicating with the central control server 500.

In order to control states of the terminals 400 in each zone according to remote control by the central control server 600, in the same zone, only the foremost relay 400a transmits a remote control signal to the successive terminals 400b and so forth up to 400n.

Accordingly, the foremost relay 400a controls and manages the terminals 400b and so forth up to 400n in the same zone.

In addition, the rearmost relay 400n in the same zone serves as the foremost relay 400a in the next zone.

When receiving the signal associated with the external shock or the signal associated with the appearance of the wild animal through the in-relays transmission between the low-power Bluetooth antennas, the rearmost relay 400n collects information on the external shock or the appearance of the wild animal and transmits the collected information to the central control server 600 through the Internet-of-things (IoT) communication module.

The central control server 600 performs IoT communication with the foremost and rearmost relays 400a and 400b, and thus remotely controls the terminals 400 or receives the information on the collision of the vehicle or the appearance of the wild animal.

In addition, the central control server 600 performs customer relationship management, traffic accident treatment, facilities management, and road maintenance.

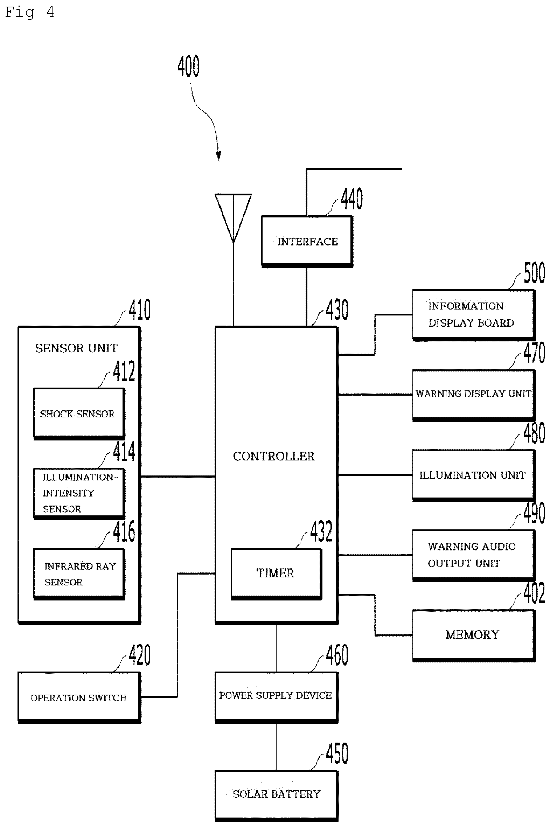

FIG. 4 is a block diagram illustrating the terminal in FIG. 3.

As illustrated in FIG. 4, the terminal 400 includes an operation switch 420, a sensor unit 410, a solar battery 450, a power supply device 460, a memory 402, a warning display unit 470, an illumination unit 480, a warning audio output unit 490, an interface 440, the low-power Bluetooth antenna, and a controller 430.

The operation switch 420 generates an operation signal according to an operation by a user and outputs the generated operation signal to the controller 430. The user here is a driver or an occupant in a vehicle involved in a traffic accident or a witness of the vehicle involved in the traffic accident.

For example, the operation switch 420 is installed outside of the terminal 400.

The sensor unit 410 detects a shock applied to the guardrail due to a vehicle accident, a speed and motion of the vehicle that is traveling, ambient brightness (illumination intensity), and the presence of a vehicle or an appearance of a wild animal on the road, and outputs a detection signal to the controller 430.

The sensor unit 410 includes a shock sensor 412, an illumination-intensity sensor 414, and an infrared ray sensor 416. For example, the shock sensor 412 is installed at half-height of the guardrail, in a state of being protected with a cushion member. The sensor unit 410 may further include a speed sensor, a motion detection sensor, and the like.

The illumination-intensity sensor 414 detects whether or not it is day or night. Furthermore, when illumination intensity at a constant low level suddenly increases due to headlights at the front of a vehicle at night, the illumination-intensity sensor 414 detects that the vehicle is present on a road. With an infrared ray reflected from a wild animal (a human body), the infrared ray sensor 416 detects a motion of the wild animal that falls within a detection range of the infrared ray sensor 416.

The sensor unit 410 is provided to be used in a case where the operation switch 420 cannot be operated by the driver or the occupant in the vehicle involved in the traffic accident.

The power supply device 460 is a device supplying power necessary to drive the terminal 400.

The power supply device 460 includes a battery and a rechargeable battery. The power supply device 460 may further include a secondary battery, such as a lead-acid battery, an alkaline storage battery, a gas battery, a lithium-ion battery, a nickel-metal hydride battery, a nickel cadmium battery, or a polymer battery.

The power supply device 460 is charged at a power supplied from the solar battery 450 and may be charged at a current supplied from a commercial power source.

The solar battery 450 is installed above the terminal 400 in such a manner as to face toward the sun.

For example, a main body, extending in a longitudinal direction, of the terminal 400 is hexahedron-shaped and has an isosceles trapezoidal cross section. The wider of two parallel surfaces is attached in a longitudinal direction to the guardrail plate 200. The operation switch 420 is installed on the smaller in the opposite direction, of the two parallel surfaces (refer to FIGS. 5 and 6).

The solar battery 450 is installed on an upper inclined surface of the terminal 400. The illumination unit 480 that serves as a streetlight is installed on a lower inclined surface thereof.

Accordingly, the solar battery 450 receives a larger amount of sunlight, and the illumination unit 480 naturally emits light to the inner side of the road.

The solar battery 450 converts solar energy into electric energy. The solar battery 450 performs static voltage processing on the resulting electric energy and supplies the resulting power to the power supply device 460.

The present invention is not limited to the supply of the power to the power supply device 460 by the solar battery 450. The solar battery 450 may supply power directly to the terminal 400.

The warning display unit 470, made up of a plurality of light emitting diodes (LEDs), is installed on the terminal 400 in a manner that faces in the direction opposite to the traveling direction of the vehicle. The warning display unit 470 may further include a cover member (not illustrated) covering the plurality of LEDs.

The warning display unit 470 may have various sizes and shapes. The cover member may be coupled to the warning display unit 470 in various ways. The cover member protects the LEDs from the outside environment and is made of a material that can provide easily identifiable features thereof. The cover member has an easily identifiable color.

The LEDs of the warning display unit 470 flicker sequentially or alternately according to the control signal of the controller 430 that receives signals of the operation switch 420 and the sensor unit 410. Various characters, symbols, arrows, or figures are displayed on the warning display unit 470.

The warning display unit 470 flickers at a fixed interval under the control of the controller 430, thereby being easily identifiable. The brightness (illumination intensity) of the LEDs is adjusted. A color of light emitted by the LEDs is changed to make the warning display unit AA470 easily identifiable. For example, LEDs for red light and LEDs for yellow light are arranged alternately.

The illumination unit 480, made up with a plurality of LEDs, is installed on the lower inclined surface of the main body of the terminal 400, in a manner that faces the road. The LEDs emit light according to the control signal of the controller 430 that receives the signal of the sensor unit 410.

The LEDs of the illumination unit 480 have a much higher luminance than the LEDs of the warning display unit 470.

When the signals of the operation switch 420 and the sensor unit 410 are not received and the control signal of the controller 430 is not input, the warning display unit 470 and the illumination unit 480 switch to a deactivation mode, thereby reducing power consumption and increasing the efficiency of the terminal 400.

The warning display unit 470 switches between the deactivation mode and an activation mode under the control of the controller 430.

The warning audio output unit 490 may be a speaker or a buzzer. The warning audio output unit 490 is installed in a manner that faces in the direction opposite to the traveling direction of the vehicle. The warning audio output unit 490 outputs an audio message or warning sound alerting the driver to the occurrence of the traffic accident or the appearance of the wide animal at a fixed interval according to the control signal of the controller 430.

The memory 402 stores characters, symbols, figures, arrows, figures, notifications, warning sound, and reference values for determining whether or not the traffic accident occurs, according to the control signal of the controller 430. Examples of the memory 402 include various storage media.

Through the interface 440, the terminal 400 makes a wired connection to the adjacent terminal 400 for communication.

Through the low-power Bluetooth antenna, the adjacent terminals or the smartphones S1 and S2 communicate wirelessly with each other.

The controller 430 receives the operation signal of the operation switch 420 and the detection signal of the sensor unit 410 and determines a situation on the basis of the received signals.

For example, when a vehicle collides with the guardrail, the shock sensor 412 that constitutes the sensor unit 410 detects a shock induced by the collision and transmits a detection signal to the controller 430. The controller 430 compares strength of the shock with reference strength stored in the memory 105. When the strength of the shock is greater than the reference shock, the controller 430 determines that a traffic accident occurs.

When a vehicle travels at night with headlights being turned on, the illumination-intensity sensor 414 measures the degree of brightness (illumination intensity) and transmits a detection signal to the controller 430. The controller 430 compares the degree of brightness with the previous degree of brightness stored in the memory 402. When the degree of brightness is much higher than the previous degree of brightness, the controller 430 determines that the vehicle travels on the road.

The infrared ray sensor 416 detects a motion of a wild animal and transmits a detection signal to the controller 430. When the motion of the wild animal is verified, the controller 430 determines that the wild animal appears.

When determining that the traffic accident occurs or the wild animal appears, the controller 430 outputs a control signal to the warning display unit 470 and/or the warning audio output unit 490. The controller 430 transmits an electric signal to the warning display unit 470 or powers on the warning display unit 470 in such a manner that the LEDs thereof flicker sequentially or alternately according to the control signal. The controller 430 causes the warning audio output unit 490 to output an audio message or warning sound according to the control signal.

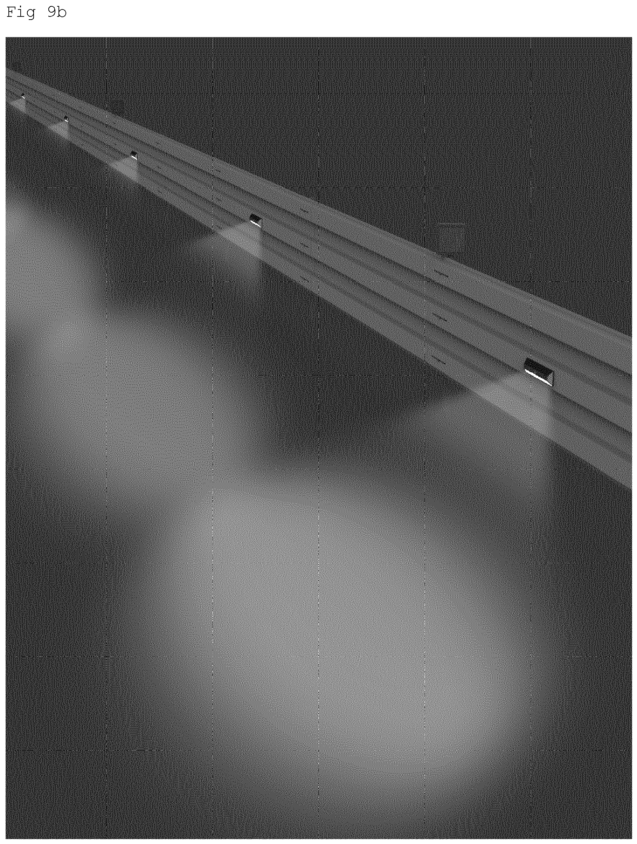

When determining that a vehicle is traveling on the road, the controller 430 outputs a control signal to the illumination unit 480. The LEDs of the illumination unit 480 emit light according to the control signal (refer to FIG. 9b).

The controller 430 transmits a control signal to the adjacent terminal 400 in the direction opposite to the traveling direction of the vehicle through the interface 440, a BLE, ZigBee, or LoRa antenna, or the like. Thus, the LEDs of the warning display unit 470 of the adjacent terminal 400 flicker or emit light. Alternatively, the LEDs of the illumination unit 480 of the adjacent terminal 400 in the traveling direction of the vehicle emit light.

The illumination-intensity sensor 414 that constitutes the sensor unit 410 measures ambient brightness (illumination intensity) and transmits a detection signal to the controller 430. The controller 430 compares the measured illumination intensity with reference illumination intensity stored in the memory 402. When the measured illumination intensity is lower than the reference illumination intensity, the controller 430 determines that it is night.

At this point, the controller 430 may cause the LEDs of the warning display unit 470 to flicker with the brightness that varies according to a value of the illumination intensity.

The controller 430 includes a timer 432. The controller 430 controls operation of each of the warning display unit 470, the warning audio output unit 490, the illumination unit 480 for a predetermined period of time, using the timer 432.

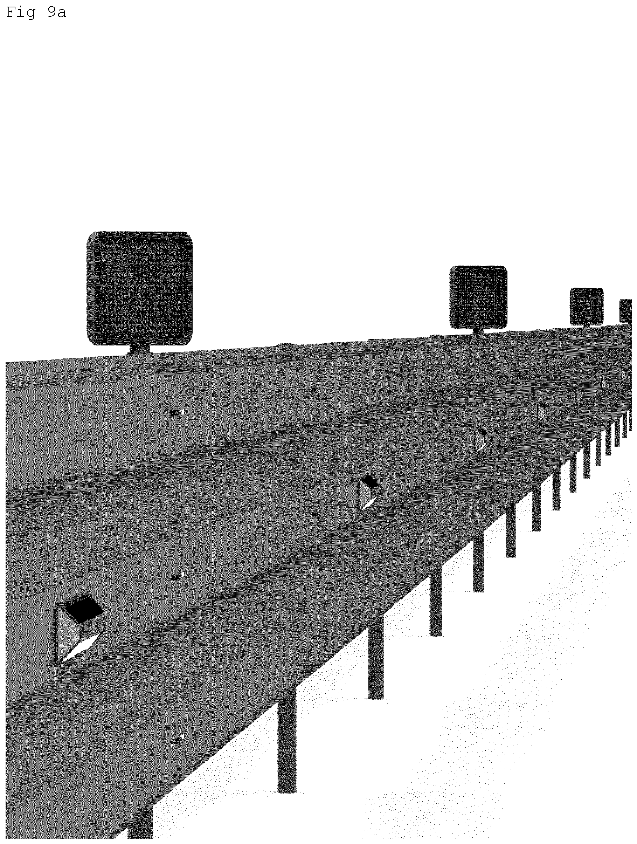

The controller 430, for example, controls the information display board 500 provided on an upper portion of the support 10 in such a manner that information received from the central control server 600, for example, an action to be taken in case of an emergence situation, or an accident (emergency) notification in case of an accident (emergency) is displayed in text format on the information display board 500 (refer to FIG. 9a).

On the other hand, it is difficult to install the guardrail in a mountainous area, a rock face, a retaining wall, or a tunnel. In this case, the terminal 400 needs to be directly installed, for example, on the rock face.

In a case where the terminal 400 is installed fixedly on the rock face, when a vehicle collides with the rock face, there is a concern that the shock sensor 412 will not detect the collision of the vehicle with the rock face because the rock face is hard.

In some cases, the terminals 400 installed on the guardrail are positioned a long distance away from each other. Thus, when a vehicle collides with a portion, at a position halfway between these adjacent terminals 400, of the guardrail, there is a concern that the shock sensor 412 will not detect the collision of the vehicle with the rock face.

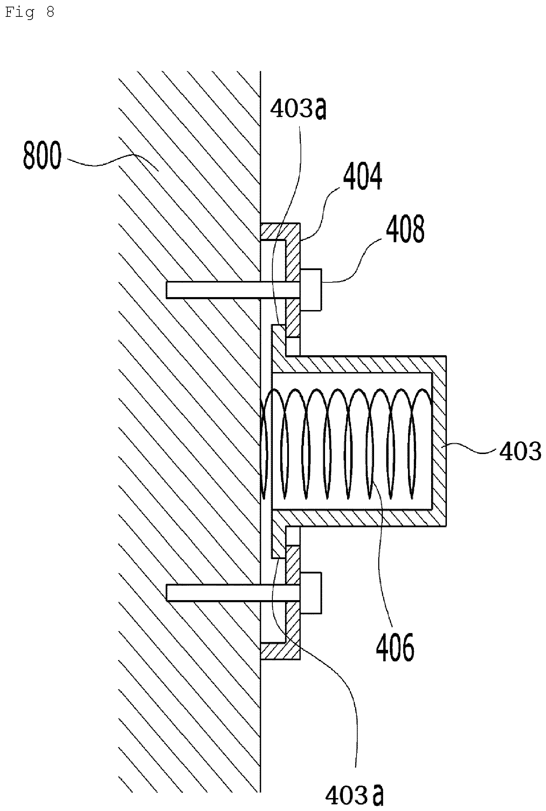

In these situations, as illustrated in FIG. 8, a bracket 404 is fastened to an object 800 to which to fasten the bracket 404, such as the guardrail or the rock face, but in such a manner that the terminal 400 is positioned a distance away from the object 800, using a third fastening member 408. The main body of the terminal 400 is supported by a spring 406 on the object 800 to increase shock sensitivity in a state where a flange 403a of the main body 403 of the terminal 400 is positioned in a space between the bracket 404 and the stationary object 800.

The example where the guardrail is installed in the divided road is described above, but the guardrail may be installed at the edge of the road. The installation of the guardrail at the edge of the road would fall within the scope of the present invention.

The preferable embodiment of the technical idea of the present invention is illustratively described with reference to the accompanying drawings and therefore does not impose any limitation on the present invention.

It is apparent to a person of ordinary skill in the art that various modifications and upgrades are possible without departing from the scope of the technical idea of the present invention.

## Claims

1. A smart guardrail comprising: a support fixedly installed at an equal distance at a center or an edge of a road, and a guardrail plate fixedly coupled to one or both sides of the support, the smart guardrail further comprising:
a shock absorption member absorbing and thus reducing a shock that is induced when a vehicle collides with the guardrail; and
a terminal configured to detect an external shock, such as the collision of the vehicle, detect an appearance of a wild animal on an inner side of the road, and transmit a warning signal to an adjacent terminal positioned in a direction opposite to a traveling direction of the vehicle and to terminals positioned in succession behind the adjacent terminal, thereby causing a warning to be displayed,
wherein a main body of the terminal is hexahedron-shaped and has an isosceles trapezoidal cross section,
a wider of parallel surfaces of the main body is attached to the guardrail plate,
an operation switch that is operated by a user to generate an operation signal when a traffic accident occurs is attached to a smaller of the parallel surfaces thereof,
a solar battery configured to convert solar energy into electric energy, perform static voltage processing on the electric energy, and supply resulting power is installed on an upper inclined surface of the main body,
an illumination unit configured to emit light according to a control signal of a controller is installed on a lower inclined surface thereof,
a bracket is fastened using a third fastening member to the guardrail in such a manner that the terminal is positioned a distance away from the guardrail, and
the main body of the terminal is supported by a spring on the guardrail to increase shock sensitivity in a state where a flange of the main body thereof is positioned in a space between the bracket and the guardrail.

2. The smart guardrail of claim 1 wherein the shock absorption member includes a shock absorption body having a first longitudinal fastening hole extending horizontally in the shape of a wave, the shock absorption body passing through the support and being positioned obliquely in the traveling direction of the vehicle between the guardrail and the support, and
the shock absorption body is fastened with a first fastening member to the guardrail plate, in a state where a portion of the shock absorption body is inserted into the support, the first longitudinal fastening hole being formed in the portion thereof.

3. The smart guardrail of claim 2, wherein the guardrail plate has a second longitudinal fastening hole extending horizontally in the shape of a wave along a direction of a road, the shock absorption body being fastened to the guardrail plate with a second fastening member that passes through the second longitudinal fastening hole.

4. The smart guardrail of claim 1, wherein the terminals, each being assigned a unique ID, are grouped into one zone, each of the terminals in the one zone comprising:
the operation switch;
the solar battery;
the illumination unit;
a sensor unit configured to detect the shock that is induced when the vehicle collides with the guardrail, detect the appearance of the wild animal on the inner side of the road, and generate a detection signal;
a controller receiving the operation signal and the detection signal, determining the traffic accident, outputting a control signal, and wirelessly relaying the control signal to the adjacent terminal positioned in the direction opposite to the traveling direction of the vehicle and to the terminals positioned in succession behind the adjacent terminal, the control signal containing the ID assigned to each of the terminals; and
a warning display unit, made up of a plurality of LEDs, alerting the occurrence of the traffic accident and the appearance of the wild animal by lighting or flickering in response to the control signal of the controller,
wherein the sensor unit detects a vehicle that is traveling on the road on a dark night and generates a detection signal, and
the controller receives the detection signal, outputs a control signal to the illumination unit, wirelessly relays the control signal to an adjacent terminal positioned in the traveling direction of the vehicle and to terminals positioned in succession ahead of the adjacent terminal, the control signal containing the ID assigned to each of the terminals.

5. The smart guardrail of claim 4, wherein, when determining the occurrence of the traffic accident or detecting the appearance of the wild animal on the inner side of the road, the controller transmits a signal for alerting the occurrence of the traffic accident or a signal for alerting the appearance of the wild animal, in the form of a push notification, to a smartphone carried by an occupant in a vehicle that is traveling in the vicinity of a place where the traffic accident occurs or a place where the wild animal appears.

6. The smart guardrail of claim 4, further comprising:
an Internet-of-things communication module, provided to each of the foremost terminal and the rearmost terminal in the zone with the respect to the traveling direction of the vehicle, receiving the control signal of the terminal in the same zone through Internet-of-things communication with a central control server, and transmitting the signal for alerting the occurrence of the traffic accident or the signal for alerting the appearance of the wild animal.

7. The smart guardrail of claim 4, further comprising:
an information display board installed on an upper portion of the support, on which an action to be taken in case of an emergency situation or an emergency notification in case of an emergence is displayed in text format.
